# EUROPÄISCHE PATENTANMELDUNG

(11) **EP 1 708 086 A2**
(43) Veröffentlichungstag der Anmeldung: **04.10.2006**
(21) Anmeldenummer: 06005757.7
(22) Anmeldetag: 21.03.2006
(51) Int. Cl.: G06F 9/46

(54) **Computersystem und Verfahren zur Aufteilung und Zuteilung von Rechenleistung innerhalb eines Computersystems**

(30) Priorität: 31.03.2005 DE 102005014717
(71) Anmelder: Fujitsu Siemens Computers GmbH, 80807 München (DE)
(72) Erfinder: Kasek, Hans-Jürgen, 80805 München (DE); Verner, Jaroslav, 81739 München (DE); Avramidis, Diogenis, 85540 Haar (DE); Dammann, Rolf, 81541 München (DE)
(74) Vertreter: Epping - Hermann - Fischer

(57) **Zusammenfassung**

Die Erfindung betrifft ein Computersystem (1) mit mindestens einer Hardwareeinheit (2), einer Steuereinrichtung (4) und mindestens zwei virtuellen Computereinheiten (6) sowie ein Verfahren zur Zuteilung von insgesamt verfügbarer Rechenleistung (13) innerhalb eines solchen Computersystems (1). Erfindungsgemäß können jeweils zwei oder mehr virtuelle Computereinheiten (6a, 6b) einer Gruppe (7) zugeordnet werden. Die Zuteilung der Rechenleistung erfolgt mehrstufig, indem anhand vorgegebener Regeln und unter Berücksichtigung von Zuteilungsparametern (26, 27) in einem ersten Schritt zunächst die verfügbare Rechenleistung (13) auf die Gruppen (7) und solche virtuellen Computereinheiten (6c), die keiner Gruppe (7) angehören, aufgeteilt wird und diesen zugeteilt wird, und in einem zweiten Schritt die einer Gruppe (7) zugeteilte Rechenleistung (17) auf die virtuellen Computereinheiten (6a, 6b), die dieser Gruppe (7) angehören, aufgeteilt wird und diesen zugeteilt wird.

## Beschreibung

Die Erfindung betrifft ein Computersystem mit mindestens einer Hardwareeinheit, einer Steuereinrichtung und mindestens zwei virtuellen Computereinheiten sowie ein Verfahren zur Aufteilung und Zuteilung von insgesamt verfügbarer Rechenleistung innerhalb eines solchen Computersystems.

Gerade bei großen Computersystemen besteht häufig die Notwendigkeit, verschiedenste und vielfältige Aufgaben parallel zu bearbeiten. Ein Weg, um dieser Anforderung flexibel zu genügen besteht darin, das Computersystem als so genanntes virtuelles Maschinensystem zu betreiben. Dabei stellt das Computersystem mehrere virtuelle Computereinheiten zur Verfügung, die sich gemeinsam die Hardwareressourcen des Computersystems teilen, für den Anwender aber als unabhängige Computereinheiten darstellen. Unabhängig bedeutet in diesem Zusammenhang, dass auf den einzelnen virtuellen Computereinheiten unterschiedlichste Betriebssysteme mit verschiedenen Applikationen, Programmen oder Skripten ausgeführt werden können und die virtuellen Computereinheiten innerhalb des Computersystems unabhängig voneinander adressiert werden können. Typischerweise wird dieses durch den Einsatz einer Steuereinrichtung im Computersystem erreicht, die als Schnittstelle zwischen den Hardwareressourcen des Computersystems und den virtuellen Computereinheiten fungiert. Die Steuereinheit kann beispielsweise ein Betriebssystem sein, auf dem ein Emulator betrieben wird der an einer oder mehreren logischen Schnittstellen die Funktionalität von Computerhardware emuliert. An eine solche logische Schnittstelle ist dann ein weiteres Betriebssystem gekoppelt, das die Basis einer virtuellen Computereinheit darstellt. Dabei brauchen das Betriebssystem der virtuellen Computereinheit und das der Steuereinrichtung zugrunde liegende Betriebssystem nicht notwendigerweise von gleichem Typ sein. Eine bekannte Implementierung eines Computersystems mit einer oder mehreren virtuellen Computereinheiten ist zum Beispiel das virtuelle Maschinensystem VM2000 der Firma Fujitsu Siemens Computers.

Eine wichtige Aufgabe der Steuereinrichtung ist die Verteilung der Hardwareressourcen auf die verschiedenen virtuellen Computereinheiten eines Computersystems und hier insbesondere die von einem oder von mehreren Prozessoren des Computersystems bereitgestellte, insgesamt verfügbare Rechenleistung des Computersystems. Da die Anzahl an virtuellen Computereinheiten nicht mit der Zahl an Prozessoren des Computersystems korreliert sein muss, werden Prozessoren häufig nur für kurze Zeitscheiben den verschiedenen virtuellen Computereinheiten zugeordnet, wobei diese Zuordnung so schnell wechselt, dass für den Benutzer der Eindruck eines kontinuierlichen Ablaufs entsteht.

Zur Steuerung des Zuteilungsverfahrens können typischerweise vom Administrator eines Computersystems für die verschiedenen virtuellen Computereinheiten ein oder mehrere Zuteilungsparameter vergeben werden, anhand derer unter Berücksichtigung des jeweiligen Rechenleistungsbedarfs für jede virtuelle Computereinheit der ihr zugewiesene Anteil an der Gesamtrechenleistung bestimmt wird. Beispielsweise ist bekannt, das Zuteilungsverfahren durch zwei Parameter je virtueller Computereinheit zu steuern, einem relativen Rechenleistungsanteil sowie einer Obergrenze für die Rechenleistung. Die Zuteilung der Rechenleistung erfolgt so, dass das Verhältnis der zugeteilten Rechenleistung für die einzelnen virtuellen Computereinheiten möglichst dem Verhältnis der entsprechenden relativen Rechenleistungsanteilen entspricht, ohne die zugeteilte Rechenleistung die jeweilige vorgegebene Obergrenze überschreitet. Es sind weitere Zuteilungsregeln, denen anderen Zuteilungsparameter zu Grunde liegen, bekannt. Beispielhaft sind hier Zuteilungsregeln, die auf der Vergabe von Prioritäten beruhen genannt, oder Zuteilungsregeln, bei denen die in der Vergangenheit benutzte Rechenleistung mit in die aktuelle Zuteilungsbestimmung einbezogen wird.

Prinzipiell ist die zugeteilte Rechenleistung für eine einzelne virtuelle Computereinheit immer nur die Vorgabe einer oberen Grenze für die tatsächlich nutzbare Rechenleistung. Die tatsächlich genutzte Rechenleistung hängt von der Auslastung der auf den virtuellen Computereinheiten ausgeführten Anwendungen ab.

Computerdienstleistungsanbieter, die ein Computersystem der beschriebenen Art einsetzen, bieten ihren Kunden häufig die Option, ein oder mehrere virtuelle Computereinheiten mit einer festgelegten gesamten Rechenleistung nutzen zu können. Die vereinbarte gesamte Rechenleistung muss vom Dienstleistungsanbieter sichergestellt werden, da sie unter Umständen für einen reibungslosen Ablauf der vom Kunden ausgeführten Vorgänge benötigt wird. Umgekehrt sollte sie aus Sicht des Dienstleistungsanbieters auch nicht unnötig überschritten werden, da der Mietpreis typischerweise an der gesamten Rechenleistung bemessen ist.

Auf der Basis bekannter Zuteilungsverfahren, die die Eingabe einer maximalen Rechenleistung für jede virtuelle Computereinheit vorsehen, wird für jede von einem Kunden gemietete virtuelle Computereinheit eine maximale Rechenleistung derart eingestellt, dass sich in Summe die von den Kunden angemietete gesamte Rechenleistung ergibt. Für den Fall, dass alle von einem Kunden gemieteten virtuellen Computereinheiten bis zu ihrer maximalen Rechenleistung ausgelastet werden, ist gewährleistet, dass der Kunde die ihm zustehende Rechenleistung auch bezieht. Ist allerdings eine oder mehrere der virtuellen Computereinheiten nicht bis zur Maximalleistung ausgelastet, bekommt der Kunde nicht die volle, ihm zustehende Rechenleistung, obwohl eventuelle eine weitere von ihm betriebene virtuelle Computereinheit mehr als die ihr zugeteilte Rechenleistung benötigen würde.

Bei den bekannten Zuteilungsverfahren müsste an dieser Stelle ein Systemadministrator manuell eingreifen, und die zugeteilten maximalen Rechenleistungen für die verschiedenen virtuellen Computereinheiten den Bedürfnissen anpassen.

Es ist daher eine Aufgabe der vorliegenden Erfindung, ein Verfahren zur Zuteilung von insgesamt verfügbarer Rechenleistung innerhalb eines Computersystems mit mindestens zwei virtuellen Computereinheiten anzugeben, bei dem ein flexiblerer Rechenleistungsausgleich zwischen bestimmten virtuellen Computereinheiten möglich ist. Es ist ferner eine Aufgabe der vorliegenden Erfindung, ein Computersystem und ein Computerprogrammprodukt anzugeben, die zur Umsetzung eines solchen Verfahrens geeignet ist.

Diese Aufgabe wird durch ein Verfahren nach Patentanspruch 1, ein Computersystem nach Patentanspruch 5 und ein Computerprogrammprodukt nach Anspruch 6 gelöst.

Die Erfindung basiert auf der Grundidee, dass ausgewählte virtuelle Computereinheiten zu einer (logischen) Gruppe zusammengefasst werden können und die Zuteilung der insgesamt verfügbaren Rechenleistung in einem zweistufigen Prozess durchgeführt wird. Je nach Bedarf können eine oder mehrere Gruppen definiert werden. In einem ersten Schritt wird dann zunächst die verfügbare Rechenleistung zwischen den Gruppen und solchen virtuellen Computereinheiten, die keiner Gruppe angehören, aufgeteilt und diesen zugeteilt. Dann wird in einem zweiten Schritt die einer Gruppe zugeteilte Rechenleistung unter den virtuellen Computereinheiten, die dieser Gruppe angehören, aufgeteilt und diesen zugeteilt.

Innerhalb dieses Grundschemas können nun Zuteilungsparameter, beispielsweise eine maximale Rechenleistung, für eine solche Gruppe vergeben werden. In einer solchen Gruppe könnten z.B. alle virtuellen Computereinheiten eines Kunden zusammengefasst werden, wodurch gesichert ist, dass die von ihm angemietete gesamte Rechenleistung im Zuteilungsprozess durch die maximale Rechenleistung für diese Gruppe widergespiegelt wird. Innerhalb der Gruppe kann dann, wiederum gesteuert durch Zuteilungsparameter, ein flexibler Rechenleistungsausgleich vorgenommen werden.

Weitere vorteilhafte Ausgestaltungen und Weiterbildungen der Erfindung sind in den Unteransprüchen angegeben.

Im folgenden wird die Erfindung anhand eines Ausführungsbeispiels mit Hilfe von zwei Figuren näher erläutert.

Es zeigt:
Figur 1 eine schematische Darstellung eines Ausführungsbeispiels des erfindungsgemäßen Computersystems und
Figur 2 ein Baumdiagramm, das die logische Anordnung von Gruppen und virtuellen Computereinheiten des Computersystems aus dem Ausführungsbeispiel von Figur 1 zueinander wiedergibt.

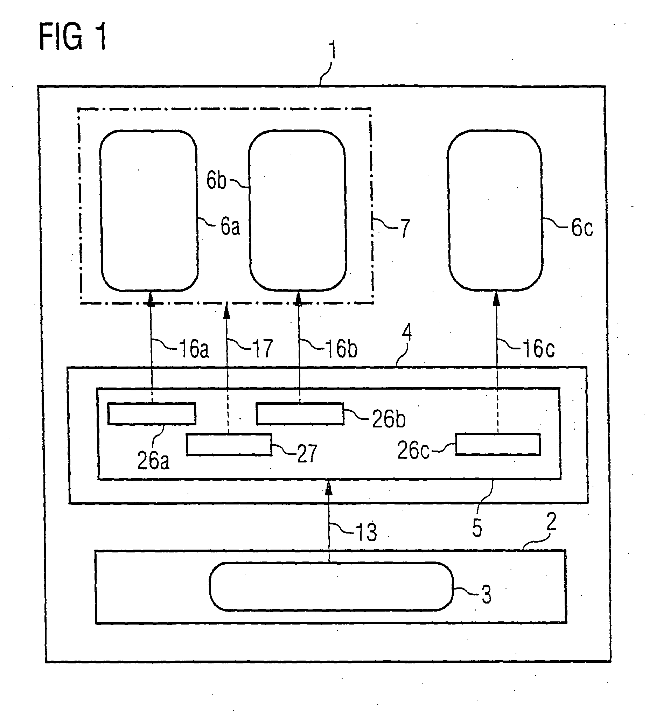

In Figur 1 ist ein Computersystem 1 dargestellt, das eine Hardwareeinheit 2 mit einem Prozessor 3 umfasst. Das Computersystem 1 weist weiterhin eine Steuereinrichtung 4 mit einer Zuteilungseinheit 5 und drei virtuellen Computereinheiten 6 (6a, 6b, 6c) auf. Die beiden virtuellen Computereinheiten 6a und 6b sind in einer Gruppe 7 zusammengefasst. Bereitgestellte oder zugewiesene Rechenleistungen sind in der Figur durch Pfeile dargestellt. Vom Prozessor 3 wird eine insgesamt verfügbare Rechenleistung 13 von der Zuteilungseinheit 5 den virtuellen Computereinheiten 6 (6a, 6b, 6c) als Rechenleistung 16 (16a, 16b, 16c) und der Gruppe 7 als Rechenleistung 17 zugeteilt. In der Zuteilungseinheit 5 sind Zuteilungsparameter 26 (26a, 26b, 26c) und 27 abgelegt, wobei die Zuteilungsparameter 26a, 26b, 26c den virtuellen Computereinheiten 6a, 6b, 6c zugeordnet sind und der Zuteilungsparameter 27 der Gruppe 7 zugeordnet ist.

Im gezeigten Ausführungsbeispiel von Figur 1 weist das Computersystem 1 drei virtuelle Computereinheiten 6 auf, die von der Steuereinrichtung 4 gesteuert werden und sich die Ressourcen der Hardwareeinheit 2 teilen. Geteilte Ressourcen können neben dem Prozessor 3 auch Arbeitsspeicher, Massenspeicher, Peripheriegeräte, Netzwerkkomponenten usw. sein, die hier nicht dargestellt sind. Im Beispiel ist eine Hardwareeinheit 2 mit nur einem Prozessor 3 gezeigt, erfindungsgemäß könnte die Hardwareeinheit 2 jedoch auch über eine Vielzahl von Prozessoren 3 verfügen.

Die Steuereinrichtung 4 wirkt als Schnittstelle zwischen der Hardwareeinheit 2 und den virtuellen Computereinheiten 6 und ermöglicht den parallelen Betrieb der virtuellen Computereinheiten 6. Dieses kann die Steuereinrichtung 4 beispielsweise erreichen, indem sie für jede virtuelle Computereinheit 6 einen virtuellen Prozessor, der nur für diese virtuelle Computereinheit zuständig ist, simuliert. Wenn den einzelnen virtuellen Computereinheiten 6 unterschiedliche, nicht überlappende Arbeitsspeicherbereiche zugeordnet werden, sind sie als unabhängige Computereinheiten nutzbar, obwohl sie sich der selben Hardwareeinheit 2 bedienen.

Die Aufteilung der Ressource "Rechenleistung" ist Aufgabe der Zuteilungseinheit 5. Ein bekannter, der Aufteilung der Rechenleistung zugrunde liegender Mechanismus ist, den Prozessor 3 sequenziell für kurze Zeitspannen, häufig Zeitscheiben genannt, den virtuellen Computereinheiten 6 zur Verfügung zu stellen. Ein (möglichst kleiner) Teil der vom Prozessor 3 bereitgestellten und insgesamt verfügbaren Rechenleistung 13 wird dabei zur Steuerung des Aufteilungsverfahrens selbst benötigt. Durch Variation der Häufigkeit und der Länge der einzelnen Zeitscheiben, in denen die verschiedenen virtuellen Computereinheiten 6 den Prozessor 3 belegen, kann erreicht werden, dass den einzelnen virtuellen Computereinheiten 6a, 6b, 6c eine bestimmte Rechenleistung 16a, 16b, 16c zugeteilt wird.

Im Rahmen der Anmeldung bedeutet Zuteilung einer Rechenleistung, dass der entsprechenden virtuellen Computereinheit nicht mehr als diese Rechenleistung zugestanden wird. Zugeteilte Rechenleistungen sind immer als maximale Rechenleistungen anzusehen, die tatsächliche benötigte Rechenleistung einer virtuellen Computereinheit kann selbstverständlich jederzeit unter der zugeteilten Rechenleistung liegen.

Die Bestimmung der Rechenleistungen 16a, 16b, 16c, die den einzelnen virtuellen Computereinheiten 6a, 6b, 6c zugeteilt wird, wird nach dem Stand der Technik von der Zuteilungseinheit 5 anhand vorgegebener Regel und vorgebbarer Zuteilungsparameter 26a, 26b, 26c durchgeführt.

Erfindungsgemäß kann die Bestimmung der Rechenleistungen 16 zudem gesteuert werden, indem zwei oder mehr der virtuellen Computereinheiten zu einer Gruppe zusammengefasst werden können und für diese Gruppe ebenfalls Zuteilungsparameter vorgebbar sind. Im gezeigten Beispiel ist eine Gruppe 7 eingerichtet, die die virtuellen Computereinheiten 6a und 6b umfasst. Für die Gruppe 7 sind die Zuteilungsparameter 27 in der Zuteilungseinheit 5 abgelegt. Es kann dabei eine beliebige Anzahl von Gruppen definiert werden, mit der Einschränkung, dass sich die Gruppen nicht überschneiden dürfen, also eine virtuelle Computereinheit nicht mehreren Gruppen zugeordnet sein darf. Eine Gruppe mit nur einer virtuellen Computereinheit oder eine Gruppe, die alle virtuellen Computereinheiten eines Computersystems 1 beinhaltet, wäre ebenfalls denkbar. Solche Konstellationen bieten an sich keinen über den Stand der Technik hinausgehenden Nutzen, haben aber auch keinen negativen Einfluss auf das Zuteilungsverfahren. Sinnvollerweise ist die Vorgabe von Zuteilungsparametern und die Anlage von Gruppen bestimmten Benutzern des Computersystems vorbehalten. Zum Beispiel kann festgelegt sein, dass nur Systemadministratoren, die auch Kontrolle über die Steuereinrichtung 4 haben, diese Privilegien besitzen.

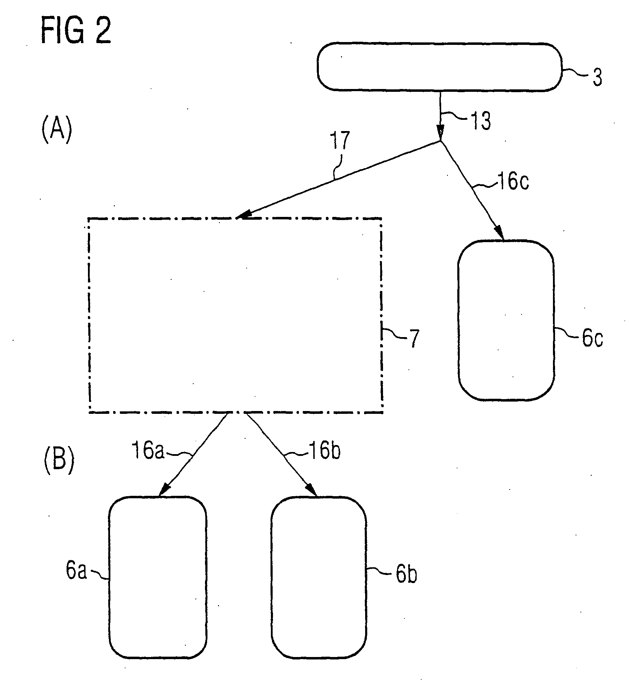

Die Bestimmung der Rechenleistung 16a, 16b, 16c, die den einzelnen virtuellen Computereinheiten 6a, 6b, 6c zugeteilt wird, wird im Folgenden anhand von Figur 2 detaillierter beschrieben.

Figur 2 stellt in einem schematischen Baumdiagramm dar, wie die virtuellen Computereinheiten 6a, 6b, 6c und die Gruppe 7 des Ausführungsbeispiels aus Figur 1 logisch zueinander angeordnet sind und wie die insgesamt verfügbare Rechenleistung 13 des Prozessors 3 in zwei Schritten A und B aufgeteilt wird.

Der Prozessor 3 mit der von ihm bereitgestellten, insgesamt verfügbaren Rechenleistung 13 stellt das Wurzelelement des Baumes dar. In der nächsten Ebene des Baumdiagramms sind alle Gruppen und solche virtuellen Computereinheiten, die keiner Gruppe angehören, nebeneinander gestellt. In diesem Ausführungsbeispiel sind das die Gruppe 7 und die virtuelle Computereinheit 6c. Die insgesamt verfügbare Rechenleistung 13 wird nun im Schritt A zwischen den Elementen dieser Ebene (Gruppe 7 und virtuelle Computereinheit 6c) aufgeteilt, wobei die Zuteilung von den Zuteilungsparametern 17 der Gruppe 7 und den Zuteilungsparametern 16c der virtuelle Computereinheit 6c gesteuert wird.

Die Zuteilung kann dabei nach verschiedenen vorgegebenen Regeln erfolgen. Beispielsweise können die Zuteilungsparameter eine Obergrenze für die zugeteilte Rechenleistung beinhalten, die nicht überschritten werden darf. Als Einheit der Rechenleistung, in der auch die Obergrenze angegeben wird, kann eine für das Computersystem 1 spezifische Größe definiert werden. Beispielsweise kann die insgesamt verfügbare Rechenleistung als Bezugsgröße gewählt werden und gleich 1 oder 100% gesetzt werden.

Eine weitere Zuteilungsregel beruht auf der Angabe von relativen Rechenleistungsanteilen als Zuteilungsparameter. Die Zuteilung erfolgt dann so, dass die den einzelnen Elemente in dieser Ebene zugeteilten Rechenleistungen sich zueinander wie die jeweiligen relativen Anteile zueinander verhalten, wenn alle Elemente einen höheren Bedarf an Rechenleistung haben als insgesamt verfügbar ist. Hat ein oder mehrere Elemente einen geringeren Rechenleistungsbedarf, wird die von diesem Element nicht genutzte Rechenleistung den anderen Elementen wiederum entsprechend ihrer relativen Anteile zugeteilt. Vorteilhaft ist eine Kombination beider vorgestellten Zuteilungsregeln. Es wird dann die jeweils kleinere Wert aus beiden Regeln tatsächlich zugewiesen.

In dem sich anschließenden zweiten Schritt B wird die Rechenleistung jeder Gruppe auf die virtuellen Computereinheiten dieser Gruppe aufgeteilt. Im Beispiel befinden sich in der untersten Ebene der Baumstruktur nur die der Gruppe 7 zugeordneten beiden virtuellen Computereinheiten 6a und 6b. Die im Schritt A der Gruppe 7 zugeteilte Rechenleistung 17 wird in die Rechenleistung 16a und 16b aufgeteilt, die den virtuellen Computereinheiten 6a und 6b zugeteilt werden, wobei die Zuteilung von den Zuteilungsparametern 26a und 26b gesteuert wird. Dabei können die gleichen Zuteilungsregeln wie in Schritt A eingesetzt werden.

Als Beispiel sei eine Rechenleistung 17 von 80% für die Gruppe 7 in Schritt A ermittelt worden. Wird als Obergrenze der Rechenleistung für die Zuteilungsparameter beider virtueller Computereinheiten 100% eingesetzt, führt dieses in keinem Fall zu einer Einschränkung. Wird als relativer Anteil an der Rechenleistung für beide ein gleicher Wert angesetzt, teilen sich die beiden virtuellen Computereinheiten 6a und 6b die ihnen zur Verfügung stehende Rechenleistung der Gruppe 7 genau zur Hälfte, d.h. jede kann maximal 40% Rechenleistung nutzen. Falls beispielsweise die virtuelle Computereinheit 6a nur 15% Rechenleistung ausnutzt, wird die verbleibende Rechenleistung von 25% gemäß der Zuteilungsregel anhand der relativen Rechenleistungsanteile der anderen virtuellen Computereinheit 6b zugeschlagen, ihr wird folglich eine Rechenleistung 16b von 65% zugeteilt. Insgesamt können aber von den beiden virtuellen Computereinheiten 6a und 6b nicht mehr als die in Schritt A der Gruppe 7 zugeteilten Rechenleistung in Anspruch genommen werden.

Das gezeigte Verfahren kann in schneller Folge wiederholt werden, so dass eine annähernd kontinuierliche Verteilung der Rechenleistung auf die verschiedenen virtuelle Computereinheiten stattfindet und so vorteilhafterweise die zur Verfügung stehenden Ressourcen optimal genutzt werden.

### Bezugszeichenliste

- 1: Computersystem
- 2: Hardwareeinheit
- 3: Prozessor
- 4: Steuereinrichtung
- 5: Zuteilungseinheit
- 6: virtuelle Computereinheit
- 7: Gruppe

- 13: insgesamt verfügbare Rechenleistung
- 16: der virtuellen Computereinheit zugeteilte Rechenleistung
- 17: der Gruppe zugeteilte Rechenleistung

- 26: Zuteilungsparameter für die virtuelle Computereinheit
- 27: Zuteilungsparameter für die Gruppe

## Patentansprüche

1. Verfahren zur Aufteilung und Zuteilung von insgesamt verfügbarer Rechenleistung (13) innerhalb eines Computersystems (1) mit mindestens zwei virtuellen Computereinheiten (6), bei dem
- Gruppen (7) definierbar sind,
- jeweils zwei oder mehr der virtuelle Computereinheiten (6a, 6b) einer solchen Gruppe (7) zuordbar sind,
- für jede virtuelle Computereinheit (6) und für jede Gruppe (7) ein oder mehrere Zuteilungsparameter (26, 27) vorgebbar sind,
und die Zuteilung erfolgt, indem anhand vorgegebener Regeln und unter Berücksichtigung der Zuteilungsparameter (26, 27)
- in einem ersten Schritt zunächst die verfügbare Rechenleistung (13) auf die Gruppen (7) und auf solche virtuellen Computereinheiten (6c), die keiner Gruppe (7) angehören, aufgeteilt und diesen zugeteilt wird, und
- in einem zweiten Schritt die einer Gruppe (7) zugeteilte Rechenleistung (17) auf die virtuellen Computereinheiten (6a, 6b), die dieser Gruppe (7) angehören, aufgeteilt und diesen zugeteilt wird.

2. Verfahren nach Anspruch 1, bei dem
als ein Zuteilungsparameter (26, 27) für jede virtuelle Computereinheit (6) und/oder für jede Gruppe (7) ein relativer Rechenleistungsanteil vorgebbar ist, wobei für jeden der beiden Schritte getrennt das Verhältnis der den verschiedenen virtuellen Computereinheiten (6) oder Gruppen (7) zugeteilten Rechenleistungen (16, 17) proportional zu den entsprechenden relativen Rechenleistungsanteilen ist, falls alle virtuellen Computereinheiten (6) oder Gruppen (7) die ihnen zugeteilten Rechenleistungen ausnutzen.

3. Verfahren nach Anspruch 1, bei dem
als ein Zuteilungsparameter (26, 27) für jede virtuelle Computereinheit (6) und/oder für jede Gruppe (7) eine maximale Rechenleistung vorgebbar ist, und die Zuteilung derart erfolgt, dass keiner virtuellen Computereinheit (6) und keiner Gruppe (7) mehr als die vorgegebene maximale Rechenleistung zugeteilt wird.

4. Verfahren nach einem der Ansprüche 2 oder 3, bei dem als Zuteilungsparameter (26, 27) für jede virtuelle Computereinheit (6) und/oder für jede Gruppe (7) sowohl ein relativer Rechenleistungsanteil als auch eine maximale Rechenleistung vorgegeben wird, wobei das Kriterium der maximalen Rechenleistung bei der Zuteilung Priorität hat.

5. Computersystem (1) mit mindestens einer Hardwareeinheit (2), einer Steuereinrichtung (4) und mindestens zwei virtuellen Computereinheiten (6), wobei
- die Hardwareeinheit (2) einen oder mehrere Prozessoren (3) aufweist, die eine bestimmte, insgesamt verfügbare Rechenleistung (13) zur Verfügung stellen,
- die virtuellen Computereinheiten (6) über die Steuereinrichtung (4) Zugang zur Hardwareeinheit (2) haben,
- die Steuereinrichtung (4) eine Zuteilungseinheit (5) umfasst, die den virtuellen Computereinheiten (6) Anteile an der insgesamt verfügbare Rechenleistung (13) als individuelle Rechenleistung (16) zuteilt,
und die Steuereinrichtung (4) dazu eingerichtet ist,
- dass Gruppen (7) definierbar sind, in denen jeweils zwei oder mehr der virtuellen Computereinheiten (6a, 6b) zusammengefasst werden, und
- dass für jede virtuelle Computereinheit (6) und für jede Gruppe (7) Zuteilungsparameter (26, 27) vorgebbar sind, und die Zuteilungseinheit (5) dazu eingerichtet ist, unter Einbeziehung der Zuteilungsparameter (26, 27)
- zunächst die insgesamt verfügbare Rechenleistung (13) auf die Gruppen (7) und solche virtuellen Computereinheiten (6c), die keiner Gruppe (7) angehören, aufzuteilen und diesen zuzuteilen, und
- danach die einer Gruppe (7) zugeteilte Rechenleistung auf die virtuellen Computereinheiten (6a, 6b), die dieser Gruppe (7) angehören, aufzuteilen und diesen zuzuteilen.

6. Computerprogrammprodukt mit Programmcode, der zur Ausführung auf einem oder mehrerer Prozessoren geeignet ist,
**dadurch gekennzeichnet, dass**
beim Ausführen des Programmcodes ein Verfahren nach einem der Ansprüche 1 bis 4 ausgeführt wird.
